# EUROPEAN PATENT APPLICATION

(11) **EP 4 050 226 A1**
(43) Date of publication of application: **31.08.2022**
(21) Application number: 21159794.3
(22) Date of filing: 26.02.2021
(51) Int. Cl.: F16B 33/02

(54) **THREAD OF A SCREW CONNECTION BETWEEN A FIRST MODULE AND A SECOND MODULE**

(71) Applicant: KNORR-BREMSE Systeme für Nutzfahrzeuge GmbH, 80809 München (DE)
(72) Inventor:
(74) Representative: DTS Patent- und Rechtsanwälte Schnekenbühl und Partner mbB

(57) **Abstract**

The invention relates to a thread of a screw connection between a first module (56) and a second module (58), wherein a first connecting element (52) of the first module (56) has a first screw thread profile (22) and a second connecting element (54) of the second module (58) has a second screw thread profile (24, 26), wherein the first screw thread profile (22) is configured such that the first connecting element (52) is suited to be screw-connected to the second connecting element (54), wherein the first screw thread profile (22) has a reduced cross-sectional thread area in relation to a standardized screw thread (26).

## Description

The present invention relates to a thread of a screw connection between a first module and a second module.

In utility vehicles, pneumatic systems are usually used for brake, suspension and other auxiliary systems. The necessary compressed air is delivered by a compressor. An air supply system is typically equipped with an air treatment system such as an air dryer unit, which serves to decrease the water content of the air delivered by the compressor.

Typically, cartridges or other modules can be connected to the system, in particular for air treatment such as air dryer units. For example, a desiccant cartridge can be used.

A connection between a cartridge and the system needs to provide a fluid-tight, in particular air-tight seal and high connection strength to absorb the forces due to high pressure inside the system. Also, a secure connection needs to be provided.

To connect the system and the cartridge or another module, threaded connection elements are used, which can be screwed into each other, thereby providing a fluid-tight connection. In usual designs, a metric or otherwise standardized thread profile can be used to secure compatibility and simple combination of different types of connection elements.

Different types of cartridges can be used for different applications. One challenge is to make sure that the right type of cartridge or module is provided for the respective application. For example, normal or oil separator cartridges (OSC) can be provided as well as cartridges for different pressure levels etc. Also, the same or similar cartridge designs can be used, since the connection is standardized.

For example US 7,997,842 B2 suggests using material of different strengths for the elements in a screw connection.

Thus, it is the problem of the invention to improve a thread of a screw connection advantageously, in particular with respect to user-friendliness, security of the connection and adaptability to different applications.

According to the invention, this problem is solved by a thread of a screw connection between a first module and a second module according to claim 1.

According to this, a first connecting element of the first module has a first screw thread profile and a second connecting element of the second module has a second screw thread profile. The first screw thread profile is configured such that the first connecting element is suited to be screw-connected to the second connecting element. The first screw thread profile has a reduced cross-sectional thread area in relation to a standardized screw thread profile.

In particular, the first module can be an air dryer cartridge and/or the second module can be a pressurized air system, in particular for a utility vehicle. However, the first and/or second module can be another device or system, such as a device for a screw connection.

The invention is based on the basic idea of providing a screw connection that is highly flexible and allows combining different thread profiles to be used, while at the same time allowing to provide selective thread profiles, which can only be used with a very specific corresponding thread profile.

Herein, the cross-sectional area of a screw thread profile may be defined as an area, which is included in one unit of a thread and groove, which are repeated along the thread. When a first screw thread profile is used, which has a reduced cross-sectional area, this means that the threading uses less material and can engage with a larger number of different threading profiles and types. In particular, such a thread profile is compatible with both the standardized screw thread profile, from which it is derived, and further screw thread profiles, which are using more material.

In particular, the first screw thread profile having a reduced cross-sectional thread area in relation to a standardized screw thread profile can be understood such that, compared to a standardized screw thread profile, the profile is reduced at least one position, but not enlarged compared to a standardized screw thread profile at any position.

In particular, the first screw thread profile can be defined such that it is a genuine subset of the standardized screw thread profile. In other words, the standardized screw thread profile can be used as an envelope curve, which comprises the first screw thread profile.

The first connecting element can be connected to the second connecting element.

In an embodiment, the first screw thread profile is a female screw thread profile, and the second screw thread profile is a male screw thread profile. In further embodiments, the inverse situation may be given, i.e., the first screw thread profile is a male screw thread profile, and the second screw thread profile is a female screw thread profile.

In an embodiment, the standardized screw thread is of an ISO metric or inch-sized or a buttress type. Also, other types of standardized thread profiles can be used as a starting point to configure the first screw thread profile. For example, the standardized screw thread can be a thread complying with a standard or norm such as ISO 965, DIN 13 or DIN 513. Also, the standardized screw thread can be a thread complying with a standard or norm for threads for connecting air-dryer cartridges and pneumatic systems, in particular for utility vehicles.

Thus, the first screw thread profile is configured such that it corresponds to a modified standardized profile. In particular, the first screw thread profile has a reduced material distribution, i.e., less material is used for the threads and the grooves between separate threads may be larger.

In an embodiment, the second screw thread profile is configured essentially inverted to the first screw thread profile. The first and second screw thread profiles can therefore engage and have a maximum of contact surface area.

In an embodiment, the first screw thread profile of the first connecting element defines threads, each with a first flank, a flat crest region and a second flank. The at least one non-rounded edge is formed between the first or second flank and the crest region.

In an embodiment, the first screw thread profile has a rounded root region is formed between the second and first flank.

In particular, a first screw thread profile is provided with a flat thread tip or crest region, having at least one non-rounded edge, and with a rounded root region between the threads.

In other embodiments, rounded and non-rounded root regions can be used, for example a sequence of rounded and non-rounded root regions.

In an embodiment, the first screw thread profile has a first flank and a second flank, which are asymmetric. For example, they can have a different slope relative to the thread longitudinal axis. Also, they can have a different shape, for example straight, rounded, with pointed steps, or otherwise non-linear.

A thread of the invention can be configured to provide female threads of one of the connecting element, in particular the first connecting element, with an edge that can securely engage with the male threads of the second module, thus improving the connection strength. A sufficiently secure and tight connection can be reached with a short thread. Also, by providing an asymmetric female screw thread profile, secure contact between male and female threads can be ensured, while preserving compatibility between different thread types.

The threads of the female screw thread profile are defined as facing inwards towards a longitudinal axis of the screw connection. On the other hand, grooves are formed between the threads, in particular defining recesses in the material of the first connecting element, which are facing outwards from the longitudinal axis of the screw connection as a whole.

On the other hand, threads of the male screw thread profile are defined as facing outwards, away from the longitudinal axis of the screw connection. Grooves of the male screw thread profile are formed between the threads, in particular defining recesses in the material of the first connecting element, which are facing towards the longitudinal axis of the screw connection.

When the first and second connecting elements are screw-connected with each other, the threads of the first connecting element, i.e., the female threads, are configured to engage with the grooves of the second connecting element, and the grooves of the first connecting element are configured to engage with the threads of the second connecting element.

In an embodiment, the first screw thread profile, which is in particular a female screw thread profile, is configured to engage with the second, in particular male, screw thread profile such that the non-rounded edge of the female screw thread profile has at least a contact point with a flank of the male screw thread profile. The second screw thread profile may be a standardized profile such as an ISO metric or buttress-type male screw thread profile. In particular, since the screw thread profiles represent cross-sections of the actual threads, the contact between the female and male screw thread profiles extends along at least a line. In further embodiments, the contact point can have an area, while it does only extend over a part of the contacted flank of the male screw thread profile; in this case, the contact between the female and male screw thread profiles extends along at least a band with a given width.

The contact is therefore advantageously well suited to transfer forces between the first and second connecting elements, and to seal the connection.

In an embodiment, the female screw thread profile is configured such that the non-round edge is formed as a sharp edge, and in particular suited to cut or bite into a material of the male screw thread. For example, the non-rounded edge may have an angle of less than 110°, in particular less than 100° and in particular equal to 90°.

The connection is therefore advantageously very secure.

In particular, the male threads can at least partially be formed from a softer material than the material of the female threads, thus facilitating a deformation of the male threads by the non-rounded edge of the female threads without damaging the female thread profile. Thus, the female threads of the second connecting element can cut into the material of the male threads, when the screw connection is tightened.

In an embodiment, the female screw thread profile is configured such that the second flank has a section, which can be arranged adjacent to the crest region, that is essentially straight and/or has a 60° angle relative to the longitudinal axis of the thread, such that a contact surface is formed between a thread of the female screw thread profile and a corresponding thread of the male screw thread profile.

The connection is therefore advantageously tight and a good transfer of forces between the male and female threads is ensured.

In particular, the angle of the second flank can be chosen such that a contact surface is formed with a male ISO screw thread.

In an embodiment, the female screw thread profile is configured such that the first flank, in a section adjacent to the crest region is formed steeper than a section of the second flank adjacent to the crest region.

In an embodiment, the first and/or second screw thread profile is configured such that at least a part of the first flank is essentially perpendicular to the longitudinal axis of the thread, in particular perpendicular to the longitudinal axis of the first connecting element.

Thus, a high stability of threads can advantageously be reached.

In an embodiment, the female screw thread profile is configured such that the rounded root region between the second and first flank has a radius corresponding essentially to a width of a corresponding crest region of the male screw thread profile, in particular the width of a corresponding crest region of a standardized male screw thread profile, for example of an ISO screw thread profile.

For example, but not limiting the invention, the radius of the rounded root region of the female profile corresponds to between 0.7 and 1.3, in particular between 0.9 and 1.1, of the width of the corresponding crest region of the male screw thread profile, in particular a corresponding male ISO thread profile.

Thus, an assembly of the first and second connecting element can advantageously be made easier for the user.

In an embodiment, the first and/or second screw thread profile is configured as a modified V-shaped profile, such that it has an inverted crest region, in particular a W- or M-shaped thread profile.

For example, the female screw thread profile can be W-shaped and the corresponding male profile can be essentially inverse to the female profile. Thus, the resulting screw connection provides advantageously a very tight closure, since the connecting elements have a very large contact area and fluids have to travel very long in order to pass by this connection.

In an embodiment, the first and/or second screw thread profile is configured as a modified V-shaped profile, such that it has a broadened and/or deepened groove region.

In an embodiment, the first and/or second screw thread profile is configured as a modified V-shaped profile, such that one flank has a lower slope than the other flank.

For example, the female screw thread profile can be asymmetrically V-shaped and the corresponding male profile can be essentially inverse to the female profile. Thus, the resulting screw connection can be made advantageously strong, to withstand large pressures and load changes.

In an embodiment, the female screw thread profile is compatible to a standardized male thread profile, in particular to a metric ISO screw thread profile and/or a buttress-type thread profile.

This allows advantageously high compatibility and connecting the first connecting element with standardized threads. On the other hand, the specific profile allows for connections with specific male threads, thereby preventing the connection of unsuited modules with each other.

In an embodiment, the first, in particular female, screw thread profile is configured such that an internal thread height is larger than an external thread height, in particular an external thread height of a corresponding standardized male thread profile, in particular a metric ISO screw thread profile and/or a buttress-type thread profile.

Thus, the internal profile is advantageously configured such that it defines grooves, in which the threads of different male profiles can easily be accommodated.

Also, connecting the connecting elements by screwing the together is simplified.

In an embodiment, an air dryer cartridge is provided for connecting with a pressurized air system with a thread according to the present description.

In further embodiments, another device can be provided for a screw connection with a thread according to the present description.

In an embodiment, a system comprises a first module and a second module, wherein the first and second module can be connected by a screw connection using a first connecting element of the first module and a second connecting element of the second module, with a thread according to the present description.

Further embodiments are described below.

According to a further embodiment, a thread of a screw connection between a first module and a second module is provided. Herein, a first connecting element of the first module has a first, in particular female, screw thread profile, and a second connecting element of the second module has a second, in particular male, screw thread profile. The first and second thread profiles define threads with a thread area and grooves or gaps between the threads with a groove area along a longitudinal cross section of the first and second connecting element., wherein the second thread profile defines a standardized, for example ISO metric or inch-sized, screw thread or a modified screw thread with a larger thread area than the standardized screw thread.

In particular, the first thread profile is configured such that the first connecting element is suited to be screw-connected to the second connecting element.

In particular, the modified male screw thread is not suited for being connected with a standardized female thread.

In particular, the first thread profile is formed within an envelope curve defined by the standardized screw thread.

For example, the first module may comprise an air dryer cartridge and/or the second module may comprise a pressurized air system for a utility vehicle.

However, the first and/or second module may comprise another device or system, such as a device for a screw connection.

In particular, the screw connection can be configured to secure the first and second modules against translation along a longitudinal axis of the screw connection.

Herein, a standardized screw thread profile can be any screw thread profile, which defines symmetric threads with straight flanks and a pointed, flattened or rounded crest. Also, the standardized screw thread profile can be any thread profile, which defines symmetric grooves with straight flanks and a pointed, flattened or rounded root. In particular, the standardized screw thread profile defines a groove with a pointed, flattened or rounded V-shaped root.

Thus, different types of thread profiles can be provided for the first module to differentiate different module designs and to ensure that the right type of module is used for the respective application. Thus, the second screw thread profile can be chosen such that only the first screw thread profile is compatible and other modules cannot be connected. Thus, the second connecting element can be made selective for a specific type of first connecting element. At the same time, the first screw thread profile can be chosen such that the first module can be connected to the second module at a standardized male screw thread profile; thus, the first screw thread profile can be used more generically.

In an embodiment, the standardized screw thread profile is an ISO metric screw thread profile. Also, a standardized screw thread profile can be a stretched or compressed ISO metric screw thread profile. Instead of an ISO metric screw thread profile, an inchedmeasured screw thread profile can be used.

In an embodiment, the modified screw thread profile is completely contained in an envelope curve defined by a corresponding standardized thread profile, thus providing compatibility of the male and female threads.

For example, a cartridge can have modified female threads and be screw-connected to a second connecting element, either with male ISO threads or non-ISO threads. On the other hand, male threads can be modified such that only a cartridge with the modified female threads can be connected.

In an embodiment, a method is provided for manufacturing a first connection element by removing material from the thread profile. A first thread profile, in particular a female screw thread profile, is determined by providing an original female thread profile, which may be a standardized thread profile, such as an ISO profile. Subsequently, the cross-sectional area of the threads is reduced by removing material, such that the resulting first thread profile can engage with a male thread profile corresponding to the original female thread profile.

In particular, the first and second connecting elements are tubular. For example, a fluid tract can be formed through the first and second connecting element.

In an embodiment, the first thread profile defines a thread with a first flank, which may have at least a straight section, wherein the first flank has the same slope as a corresponding flank of the standardized thread profile. Also, the first thread profile defines a second flank, which may have at least a straight section, wherein the second flank has a lower slope than the corresponding flank of the standardized thread profile. Thus, an asymmetric thread is provided.

In an embodiment, the first thread profile defines a symmetric thread. In particular, the thread profile may have symmetric grooves and threads, in particular a V- or U-shaped groove and/or thread.

In an embodiment, the first thread profile defines a thread with an inverted crest region.

In an embodiment, the first thread profile defines a thread with essentially the same thread base width as for the corresponding standardized thread profile.

In an embodiment, the first thread profile defines a thread with a flank with a section that is perpendicular to the longitudinal axis of the first connecting element.

In an embodiment, the perpendicular section of the flank is arranged next to a flattened or rounded root of the groove defined by the first thread profile.

In an embodiment, the first thread profile defines a thread with the same thread height as a thread height in a corresponding standardized thread profile and other parameters of the thread profile. In particular, the corresponding groove depth may be equal for the first and the standardized screw thread profile.

In an embodiment, the first thread profile defines a thread with a first thread area, which may be defined by a thread height and a thread base width. Herein, the first thread area is smaller than the area of a corresponding groove of the standardized screw thread profile. Thus, there is a gap between the first and second connecting element inside the connected threads.

In an embodiment, a first connecting element for providing a screw connection with a second connecting element is provided, wherein the first connecting element has a first screw thread profile, which defines threads and grooves along a longitudinal cross section of the first connecting element. Also, the first screw thread profile is configured such that the first connecting element is suited to engage with a second screw thread profile of the second connecting element that defines a standardized screw thread or a modified screw thread with a larger thread area than for the standardized screw thread profile.

Thus, compatibility is reached for standardized and not standardized screw profiles, in particular for ISO and non-ISO screw thread profiles.

In particular, the first thread profile is formed within an envelope curve defined by the standardized screw thread.

In a method for manufacturing threads according to the first screw thread profile, a first connecting element is provided and material is removed such that a modified first screw thread profile is reached that has a smaller thread area than according to the standardized screw thread profile.

While the thread profiles of connecting elements are usually chosen inverse to each other, i.e., the first and second thread profiles correspond essentially to each other's inverse profile, a thread profile can be more generic, i.e., compatible to a larger number of corresponding thread profiles, when material is removed from the thread profile.

Also, customized cartridge solutions can be provided.

Cartridges with the specific threading can be made compatible with standardized, metric thread air dryer connections, while it is secured that only the same unique thread cartridge can be mounted to a unique thread air dryer.

The threading for such a connection can in particular be based on a standard ISO metric screw threading. Thus, the threading of one connection element, in particular a female threading, is compatible to a respective standard threading, in particular a standard male threading.

As a difference between standard and specific threading, material can be removed from the threads of the first connection element, in particular a female threading, as typically used for a cartridge for pressurized air applications. Thus, it is ensured that unique thread connection elements such as cartridges are compatible with and can be mounted on metric thread standard connection elements, such as threads of an air dryer.

However, the threading can be used in other applications, such as other devices or systems for a screw connection.

In one embodiment, material is removed from the tip region of the female threading. For example, an inverted crest region can be formed, i.e., instead of an inwards-facing pointed, rounded or flat crest of the internal threads, the screw thread profile can comprise an outwards-pointing region. In particular, two or more separate crests can be formed.

In one embodiment, material is removed from one side of the threading with a profileangle modification.

In one embodiment, material is removed in a root region of the female threading.

In one embodiment, material is removed from the threads and grooves of the female threading, thus combining two afore-mentioned variants.

Further details and features of the present invention and its embodiments shall now be described and explained in the figures.

It is shown in:
- **Fig. 1**: a schematic view of a screw connection;
- **Fig. 2A-2D**: an embodiment of threaded connecting elements;
- **Fig. 3A-3D**: a further embodiment of threaded connecting elements;
- **Fig. 4A-4E**: a further embodiment of threaded connecting elements;
- **Fig. 5A-5C**: a further embodiment of threaded connecting elements;
- **Fig. 6A-6C**: a further embodiment of threaded connecting elements;
- **Fig. 7**: an embodiment of the system; and
- **Fig. 8**: an embodiment of the method.

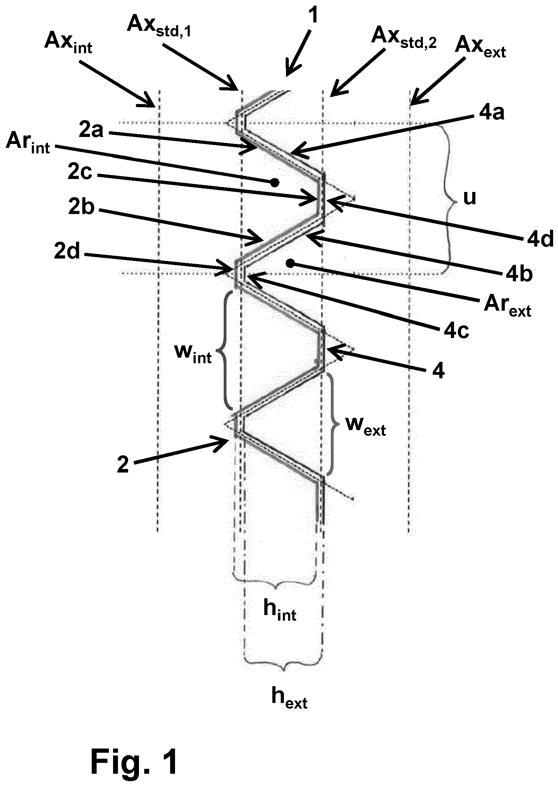

Turning to **Fig. 1****,** a schematic view of a screw connection is described. In particular, the most relevant elements of screw thread profiles and screw connections are shown.

In particular, the screw connection can be reached by ISO metric screw threads, such as defined, for this example, in international standard ISO 68-1. Herein, each thread is characterized by a major diameter and a pitch. ISO metric threads consist of a symmetric V-shaped thread. The outermost 1/8 and the innermost 1/4 of the height H of the V-shape are cut off from the V-profile. In the plane of the thread axis, the flanks of the V have an angle of 60° to each other. The thread depth is thus in particular 0.54125 * pitch.

In an external, male thread, such as on a bolt, the major diameter and the minor diameter define maximum dimensions of the thread. This means that the external thread has a flat end, but can be rounded out below the minor diameter. Conversely, in an internal, female thread, e.g., in a nut, the major and minor diameters are minimum dimensions; therefore, the thread profile has a flat end, but may be rounded out beyond.

The minor diameter and effective pitch diameter are derived from the major diameter and pitch.

In **Fig. 1****,** a detail of a system 1 is shown. An internal screw thread profile 2 and an external screw thread profile 4 are engaged with each other.

The threads of each thread profile 2, 4 are arranged in the corresponding grooves of the respective profile 4, 2.

Along a longitudinal axis of the connection, axes Axint, Axₑₓₜ are defined at longitudinal axes of the internally and externally threaded connecting elements, respectively.

Furthermore, along the longitudinal axis of the connection, axes Ax_{std, 1}, Ax_{std,2} are defined as axes, which limit the outer and inner diameter of the threads.

A unit u, whose width corresponds to the pitch of the thread, denotes one unit u defining one thread and one groove. Along the length of the threading, the profile of the unit u is repeated.

The internal screw thread profile 2 defines a thread with a first flank 2a, which in this case of an internal threading extends inwardly, i.e., towards the center axis of the threading. The first flank 2a extends to a crest region 2c, which is flat in the embodiment. Adjacent to the crest region 2c, a second flank 2b is arranged, which extends outwardly and ends at a root region 2d, which is also flat in this example. The flanks 2a, 2b and the crest region 2c define a thread with a base width wᵢₙₜ and a thread height hint.

Similarly, the external screw thread profile 4 defines a thread with a first flank 4a, which in this case of an external threading extends outwardly, i.e., away from the center axis of the threading. The first flank 4a extends to a root region 4d, which is flat in the embodiment. Adjacent to the root region 4d, a second flank 4b is arranged, which extends inwardly and ends at a crest region 4c, which is also flat in this example. The flanks 4a, 4b and the crest region 4c define a thread with a base width wₑₓₜ and a thread height hₑₓₜ.

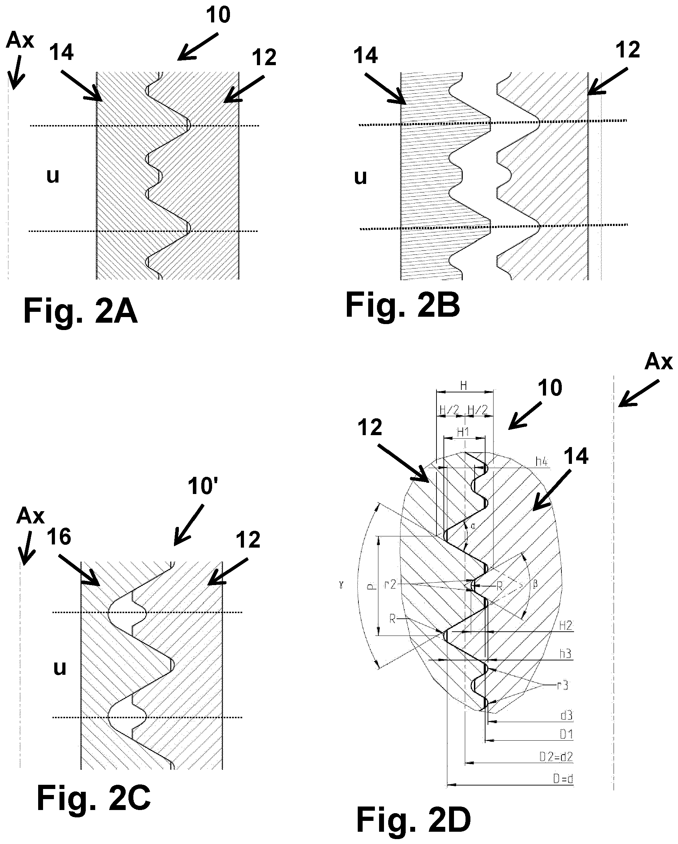

Turning to **Fig. 2A-2D****,** an embodiment of the threaded connection elements is described. Reference is made to the above-described screw connection and only differences are described in detail.

In the case shown in Fig. 2A-D, the female screw thread profile 12 is modified from a V-shaped profile such that it has an inverted tip. I.e., instead of a flat crest region, an outwardly extending V-shaped cross-section is formed. The resulting cross-section may be understood as a W- or M-shaped thread profile.

In the case of Fig. 2A, an assembly of connected elements 10 is shown. A longitudinal center axis Ax of the screw connection is shown schematically; the relation of lengths and distances are not to scale. The male thread profile 14 has essentially the inverted thread profile as the female thread profile 12, i.e., grooves and threads of the male thread profile 14 are essentially formed as "negative" of the threads and grooves of the female thread profile 12. Thus, and only a small gap or no gap is formed between the profiles 12, 14.

The modification of the female profile 12 leads to a lower thread profile height, while the same connecting surface is reached as for a thread with V-profile. Thus, a higher strength of the connection is reached.

At the same time, there are more connected edges between the threads at the same length, thus yielding a better orientation and connection between the two connecting elements.

Also, a labyrinth seal is achieved against fluid, water, oil and air due to more complex geometry, in particular the inverted thread tip. Thus, the connection is made especially fluid-tight.

In the case of Fig. 2B, the female 12 and male profiles 14 are shown separated from each other. The internal thread profile 12 is shown schematically in a front view.

Thus, a standardized female screw profile would not be suited to be screw-connected with the male screw thread profile 14 shown in Fig. 2A and 2B.

In the case of Fig. 2C, another assembly of connected elements 10' is shown. A longitudinal center axis Ax of the screw connection is shown schematically; the relation of lengths and distances are not to scale. A standardized male thread profile 16 has essentially a V-shaped or ISO metric screw thread profile corresponding to the female thread profile 12, i.e., grooves and threads of the male thread profile 16 are corresponding to threads and grooves of the female thread profile 12. However, due to the modifications of the female screw thread profile 12, gaps are formed between the profiles 12, 16.

In particular, the threads and grooves are not pointed, but flattened or rounded. This case is typically closer to the actual design of ISO metric and similar screw threads than profiles with sharp edges. In further embodiments, pointed transitions can be formed between sections of the thread profiles, for example connecting a flank and a tip or groove by a pointed transition.

The female thread profile 12 of this embodiment is modified from a V-shaped profile such that it has an inverted tip. I.e., instead of a flat crest region, an outwardly extending V-shaped cross-section is formed. The resulting cross-section may be understood as a W- or M-shaped thread profile.

Thus, for a threading as the one shown in Fig. 2A, a standardized female screw profile would not be suited to be screw-connected with the male screw thread profile 14.

In the case of Fig. 2D, the assembly of Fig. 2A is shown with technical details for the respective sizes, lengths and angles, and their relation to each other. Of course, all lengths the dimensions may be scaled or modified, depending on the purpose.

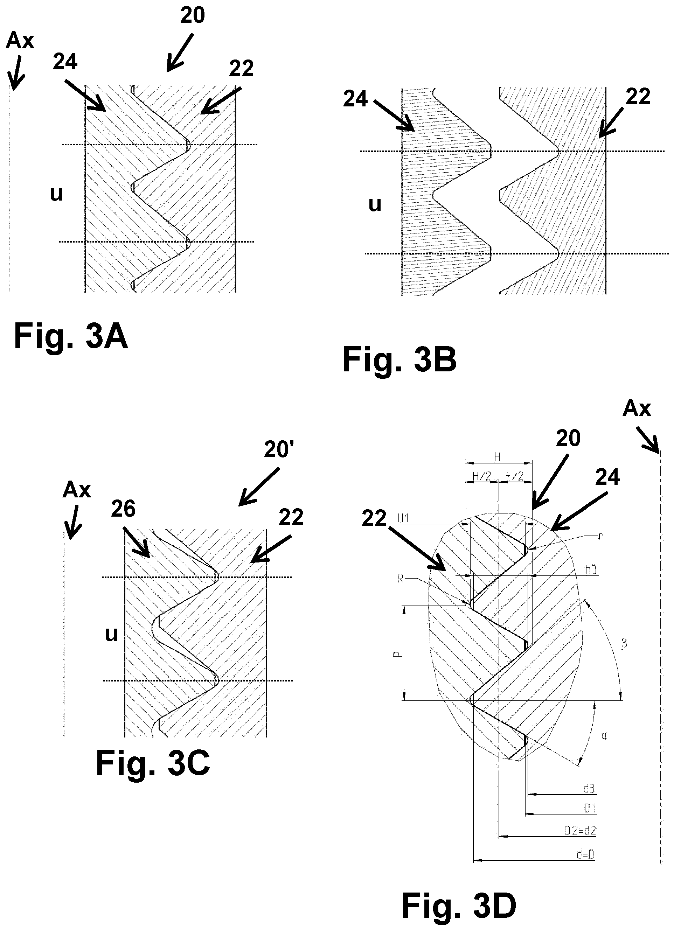

Turning to **Fig. 3A-3D****,** another embodiment of the threaded connection elements is described. Reference is made to the above-described embodiments and only differences are described in detail.

In the case shown in Fig. 3A-D, the female thread profile 22 is modified from a V-shaped profile such that one flank has a lower slope. Also, the height of the female threads is smaller than for a standardized thread. Thus, the threads of the female screw thread profile 22 do not fill out a groove of a standardized male screw thread profile 26 completely.

In the case of Fig. 3A, an assembly of connected elements 20 is shown. A longitudinal center axis Ax of the screw connection is shown schematically; the relation of lengths and distances are not to scale. The male thread profile 24 has essentially the inverted thread profile as the female thread profile 22, i.e., grooves and threads of the male thread profile are essentially formed as "negative" of the threads and grooves of the female thread profile 24, and only a small or no gap is formed between the profiles 22, 24.

Compared to the above-described embodiment, this embodiment has the advantage that less material is removed from the female thread 22 as compared to a V-shaped profile, and thus strength and life time are increased. This is particularly important, when a cartridge is connected.

Also, an increased clamping force is reached when tightening with the same torque.

In the case of Fig. 3B, the female 22 and male profiles 24 are shown separated from each other. The internal thread profile 22 is shown schematically in a front view.

Thus, a standardized female screw profile would not be suited to be screw-connected with the male screw thread profile 24 shown in Fig. 3A and 3B.

In the case of Fig. 3C, another assembly of connected elements 20' is shown. A longitudinal center axis Ax of the screw connection is shown schematically; the relation of lengths and distances are not to scale. A standardized male thread profile 26 has essentially a V-shaped or ISO metric screw thread profile corresponding to the female thread profile 22, i.e., grooves and threads of the male thread profile 26 are corresponding to threads and grooves of the female thread profile 22. However, due to the modifications of the female screw thread profile 22, gaps are formed between the profiles 22, 26.

In the embodiment, the threads and grooves are not pointed, but flattened or rounded. This case is typically closer to the actual design of ISO metric and similar screw threads than profiles with sharp edges. In further embodiments, pointed transitions can be formed between sections of the thread profiles, for example connecting a flank and a tip or groove by a pointed transition.

Thus, for a threading as the one shown in Fig. 3A, a standardized female screw profile would not be suited to be screw-connected with the male screw thread profile 24.

In the case of Fig. 3D, the assembly 20 of Fig. 3A is shown with technical details for the respective sizes, lengths and angles, and their relation to each other. Of course, all lengths the dimensions may be scaled or modified, depending on the purpose.

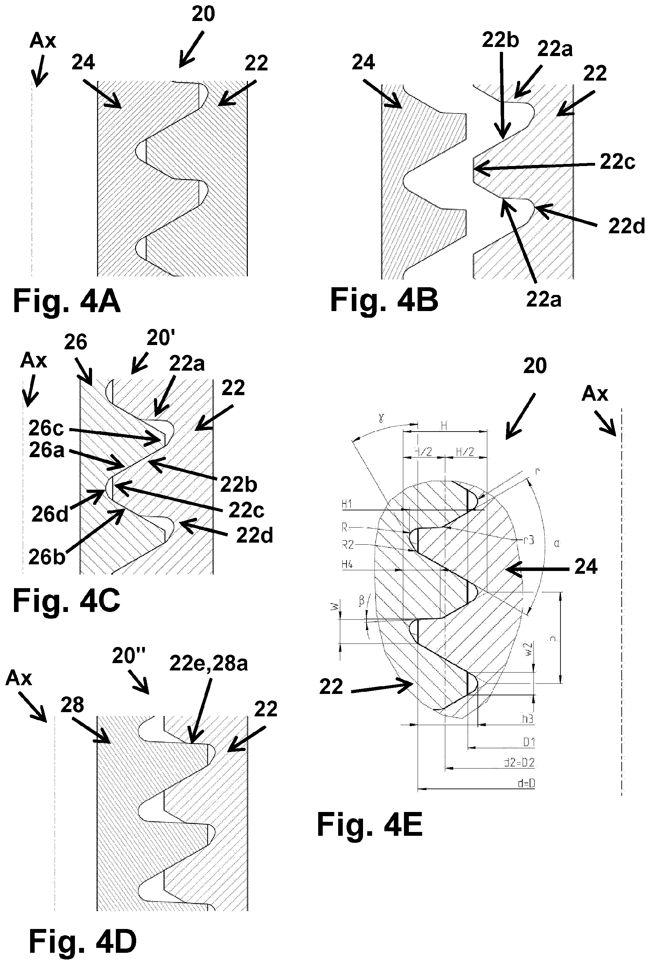

Turning **to** **Fig. 4A-4E****,** another embodiment is described, which is similar to the asymmetric embodiment shown above. Reference is made to the above-described screw connection, such as the one shown in Fig. 1, and only differences are described in detail. Similar elements are shown with the same reference numerals.

In this particular embodiment, the female screw thread profile according to this embodiment is compatible not only to a corresponding "inverted" male screw thread profile, but also a symmetric standardized male screw thread profile, such as an ISO metric screw profile, and an asymmetric, buttress-type male screw thread profile.

In the case of Fig. 4A, an assembly of connected elements 20 is shown. A longitudinal center axis Ax of the screw connection is shown schematically; the relation of lengths and distances are not to scale. The male thread profile 24 has essentially the inverted thread profile as the female thread profile 22, i.e., grooves and threads of the male thread profile 24 are essentially formed as "negative" of the threads and grooves of the female thread profile 22, and no gap or only a small gap is formed between the profiles 22, 24.

Fig. 4B shows the female 22 and male thread profiles 24 separately.

In this embodiment, a standardized female screw profile would not be suited to be screw-connected with the male screw thread profile shown in Fig. 4A and 4B.

In the case of Fig. 4C, a standardized male thread profile 26 has essentially a V-shaped or ISO metric screw thread profile corresponding to the female thread profile 22, i.e., grooves and threads of the male thread profile 26 are positioned corresponding to threads and grooves of the female thread profile 22. However, due to modifications of the female screw thread profile 22, gaps are formed between the profiles 22, 26.

In this embodiment, the female screw thread profile 22 defines threads, each with a first flank 22a, a flat crest region 22c, and a second flank 22b. Herein, the first 22a and second flank 22b are asymmetric, i.e., they have different thread angles relative to the longitudinal axis of the connection.

Also, a non-rounded edge is formed between the first flank 22a and the crest region 22c and between the second flank 22b and the crest region 22c.

The threads of the female thread profile 22 engage with the grooves of the male thread profile 26 such that the second flank 22b forms a contact surface with the corresponding first flank 26a of the male thread profile 26. To this end, the second flank 22b has a section adjacent to the crest region 22c that is essentially straight and has the same angle relative to the longitudinal axis Axint as the corresponding first flank 26a of the male thread profile 26.

Also, the non-rounded edge of the female thread profile 22 is in contact with the surface of the male thread 26, in particular at the corresponding second flank 26b of the male thread profile 26.

The first 22a and second flank 22b are asymmetrical. In the embodiment, the first flank 22a has a region that is steeper than the second flank 22b, in particular the region of the first flank 22a, where it is adjacent to the root region 22d, is essentially perpendicular to the longitudinal axis of the connection.

Also, the root region 22d between the second 22b and first flank 22a is rounded. In particular, the root region 22d may have a radius corresponding essentially to a width of the flat crest region 26c of the male screw thread profile 26. The resulting threads are advantageously solid.

Due to the asymmetric form of the female thread profile 22 and the symmetric form of the male thread profile 26, gaps are formed between the threads, as visible in Fig. 4C.

In particular, the male screw thread profile 26 is an ISO screw thread profile.

In further examples, not limiting the invention, the radius of the rounded root region 22d can be determined by a factor between 0.7 and 1.3, in particular between 0.9 and 1.1, relative to the width of a corresponding crest region 26d of the male screw thread profile 26.

In the case shown in Fig. 4A, the same female screw thread profile 22 is shown, in connection with a corresponding male screw thread profile 24, which has essentially the inverted thread profile as the female screw thread profile 22, i.e., grooves and threads of the male thread profile 24 are formed as "negative" of the threads and grooves of the female thread profile 22, and no gap or only a small gap is formed between the profiles 22, 24.

Thus, a standardized female screw profile would not be suited to be screw-connected with the male screw thread profile shown in Fig. 4A.

In the case of Fig. 4C, another assembly of connected elements 20' is shown. A longitudinal center axis Ax of the screw connection is shown schematically; the relation of lengths and distances are not to scale. A standardized male thread profile 26 has essentially a V-shaped or ISO metric screw thread profile corresponding to the female thread profile 22, i.e., grooves and threads of the male thread profile 26 are corresponding to threads and grooves of the female thread profile 22. Due to the modifications of the female screw thread profile 22, gaps are formed between the profiles 22, 26.

In the case of Fig. 4D, yet another assembly of connected elements 20" is shown. A longitudinal center axis Ax of the screw connection is shown schematically; the relation of lengths and distances are not to scale. A standardized male thread profile 28 has essentially a standardized buttress-type screw thread profile corresponding to the female thread profile 22, i.e., grooves and threads of the male thread profile 28 are corresponding to threads and grooves of the female thread profile 22. Due to the modifications of the female screw thread profile 22, gaps are formed between the profiles 22, 26.

In the case shown in Fig. 4A-4E, the female thread profile 22 is modified from a V-shaped profile such that at one flank, a region 22e close to the adjoining groove is deepened such that the flank is essentially running in a direction perpendicular to the longitudinal axis of the screw. This modification is clearly visible from a comparison of male 26 and female screw thread profiles 22 in Fig. 4C. It is designed such that a correspondingly oriented surface of a buttress-type male screw thread profile 28 can engage at least partially with this region 22e, 28a, as shown in Fig. 4D.

When the female screw thread profile 22 of this embodiment engages with a standardized buttress-type screw thread profile 28, there are in particular gaps between the crest region of the female screw thread profile 22 and the grooves of the buttress-type screw thread profile 28.

In the case of Fig. 4E, the assembly 20 of Fig. 4A is shown with technical details for the respective sizes, lengths and angles, and their relation to each other. Of course, all lengths the dimensions may be scaled or modified, depending on the purpose.

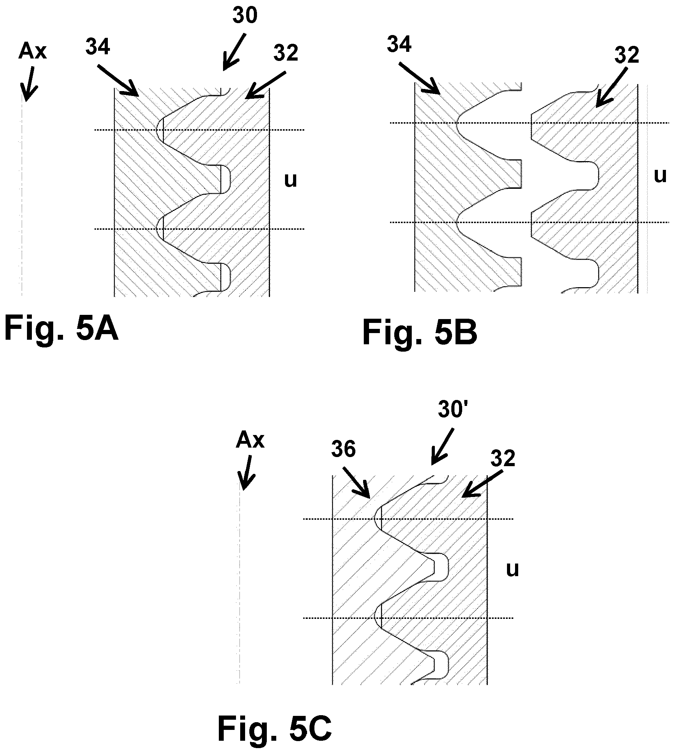

Turning to **Fig. 5A-5C****,** another embodiment of the threaded connection elements is described. Reference is made to the above-described embodiments and only differences are described in detail.

In the case shown in Fig. 5A-5C, the female thread profile 32 is modified from a V-shaped profile such that the root regions are deepened and have an essentially rectangular form. I.e., deepened root regions are arranged between the threads of the female thread profile 32.

In the case of Fig. 5A, an assembly of connected elements 30 is shown. A longitudinal center axis Ax of the screw connection is shown schematically; the relation of lengths and distances are not to scale. The male thread profile 34 has essentially the inverted thread profile as the female thread profile 32, i.e., grooves and threads of the male thread profile 34 are essentially formed as "negative" of the threads and grooves of the female thread profile 34, and only a small gap or no gap is formed between the profiles 32, 34.

Compared to the above-described embodiment, this embodiment has the advantage that an especially high thread profile height is reached as compared to, e.g., standard ISO threads, and also a larger connecting surface between the threads is achieved. This leads to an increased strength of the connection.

Also a higher tightening torque can be reached.

Also, the thread profile allows for more flexible threads. This allows for an increase in service life.

Also, a better clamping force is reached when tightening with the same torque.

In the case of Fig. 5B, the female 32 and male profiles 34 are shown separated from each other. The internal, female thread profile 32 is shown schematically in a front view.

Thus, a standardized female screw profile would not be suited to be screw-connected with the male screw thread profile 34 shown in Fig. 5A and 5B.

In the case of Fig. 5C, another assembly of connected elements 30' is shown. A longitudinal center axis Ax of the screw connection is shown schematically; the relation of lengths and distances are not to scale. A standardized male thread profile 36 has essentially a V-shaped or ISO metric screw thread profile corresponding to the female thread profile 32, i.e., grooves and threads of the male thread profile 36 are arranged corresponding to threads and grooves of the female thread profile 32. However, due to the modifications of the female screw thread profile 32, gaps are formed between the profiles 32, 36.

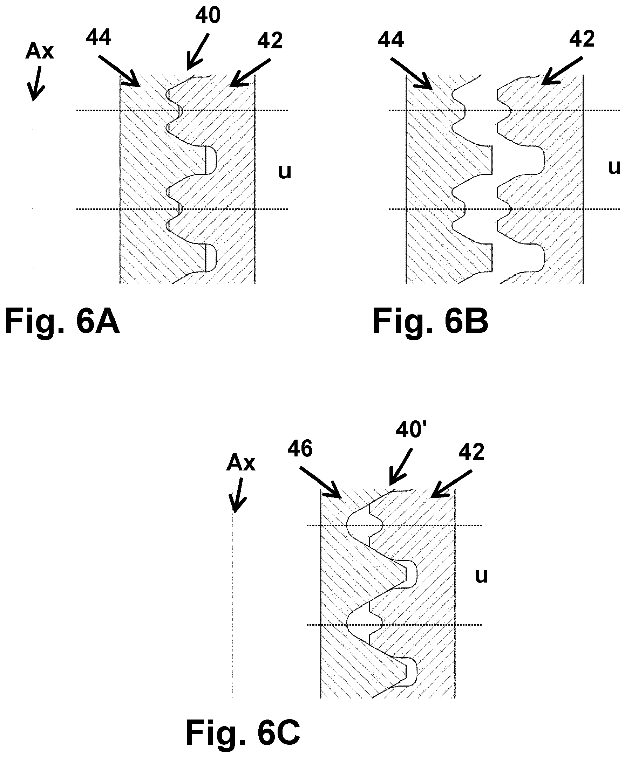

Turning to **Fig. 6A-6C****,** another embodiment of the threaded connection elements is described. Reference is made to the above-described embodiments and only differences are described in detail.

In the case shown in Fig. 6A-6C, the female thread profile 42 is modified in a way of combining the embodiments of Fig. 2A-2C and 5A-5C. Starting from a V-shaped profile, the root regions are deepened and have an essentially rectangular form, i.e., deepened root regions are arranged between the threads of the female thread profile 42. Also, the female thread profile 42 is modified from a V-shaped profile such that it has an inverted tip, i.e., instead of a flat crest region, an outwardly extending V-shaped cross-section is formed. The resulting cross-section may be understood as a W- or M-shaped thread profile.

In the case of Fig. 6A, an assembly of connected elements 40 is shown. A longitudinal center axis Ax of the screw connection is shown schematically; the relation of lengths and distances are not to scale. The male thread profile 44 has essentially the inverted thread profile as the female thread profile 42, i.e., grooves and threads of the male thread profile 44 are essentially formed as "negative" of the threads and grooves of the female thread profile 44, and only a small gap or no gap is formed between the profiles 42, 44.

Compared to the above-described embodiment, this embodiment has the advantage that the complex geometry with an inverted thread tip (M- or W-shaped profile) and a protruding thread tip lead to a labyrinth seal against water, pair, oil and air.

Also, a larger height of the thread profile is achieved and the threads have more flexible parts, thus yielding an increase in lifetime.

At the same length of a screw connection, i.e., with the same number of units u with threads and grooves, more connected edges are provided between the threads. This gives a better orientation and connection between the two connecting elements.

In the case of Fig. 6B, the female 42 and male profiles 44 are shown separated from each other. The internal, female thread profile 42 is shown schematically in a front view.

Thus, a standardized female screw profile would not be suited to be screw-connected with the male screw thread profile 44 shown in Fig. 6A and 6B.

In the case of Fig. 6C, another assembly of connected elements 40' is shown. A longitudinal center axis Ax of the screw connection is shown schematically; the relation of lengths and distances are not to scale. A standardized male thread profile 46 has essentially a V-shaped or ISO metric screw thread profile corresponding to the female thread profile 42, i.e., grooves and threads of the male thread profile 46 are arranged corresponding to threads and grooves of the female thread profile 42. However, due to the modifications of the female screw thread profile 42, gaps are formed between the profiles 42, 46.

For all the above-shown and described embodiments, the profiles for male and female screw thread profiles can be inverted. Thus, the connection element, which has a female screw thread profile in the embodiments, may have a corresponding male screw thread profile, and the connection element, which has a male screw thread profile in the embodiments, may have a corresponding female screw thread profile.

A central idea of the invention, which is embodied by these embodiments, is to provide thread profiles, which are compatible to standardized, e.g., ISO metric or buttress-type threads, while at the same time allowing to provide corresponding threads, which are themselves not compatible with such standardized threads.

In particular, the above-described embodiments of the screw threads can be understood as simplified. In addition to these profiles, the skilled person will understand that modifications, e.g., with respect to radii of rounded edges, angles and slopes as well as distances and the relation of different parameters may vary. In particular, the parameters may be chosen such that the male and female threads can be easily and securely connected.

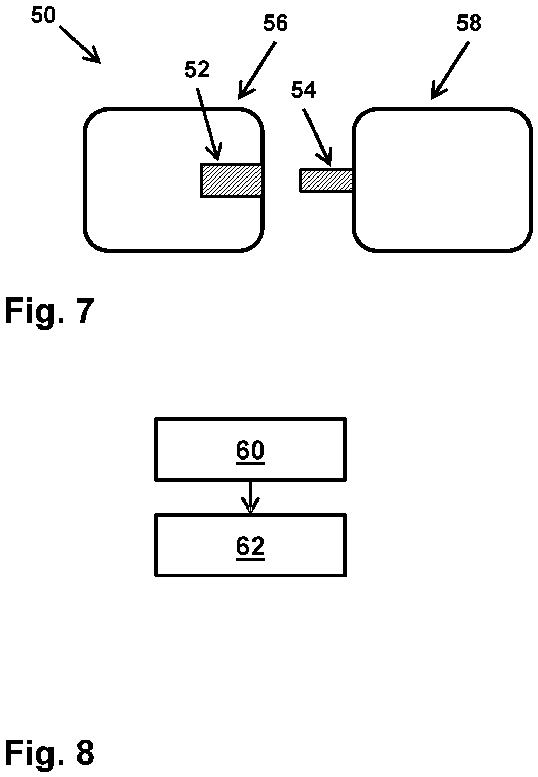

Turning to **Fig. 7****,** an embodiment of the system is described. Reference is made to the above-described embodiments.

The system 50 comprises a first module 56, which may be a cartridge, in particular an air dryer cartridge.

Also, the system 50 comprises a second module 58, in particular a pressurized air system.

The first module 56 has a first connection element 52.

The second module 58 has a second connection element 54.

The first 52 and second connection elements 54 are complementary to each other, i.e., they are configured such that a screw connection can be provided by the first 52 and second connection elements 54.

The first connection element 52 has an internal threading, and is thus configured as a "female" connection element. Herein, the first connection element 52 has a first thread profile.

The second connection element 54 has an external threading, and is thus configured as a "male" connection element. Herein, the second connection element 54 has a second thread profile.

The first 52 and second connection elements 54 of the system 50 may be configured as shown above for the exemplary embodiments of Fig. 1 to Fig. 6C.

In particular, the first thread profile of the first connection element 52 is configured such that it is compatible to the second thread profile of the second connection element 54. I.e., a screw connection can be provided by screw-connecting the first 52 and second connection element 54.

On the other hand, in an inverted case, where internal and external threading are inverted, a third thread profile, which corresponds to an inverted first profile, and a fourth profile, which corresponds to an inverted second profile, are not compatible. I.e., no screw connection can be provided between connection elements with the third and fourth thread profiles.

In further embodiments, however, the system can be applied for other applications. The first and/or second module can be other devices or systems, such as a device for a screw connection.

Turning to **Fig. 8****,** an embodiment of the method for manufacturing a first connection element is described. Reference is made to the above-described embodiments.

In this embodiment, the first connecting element 52 is provided by modifying an internal screw thread profile, i.e., a female thread profile.

In a step 60, an original female thread profile is provided. Herein, a standardized thread profile is used, such as an ISO metric screw profile.

In a step 62, the cross-sectional area of the threads is reduced by removing material. Thereby, a thread profile can be reached as for example in the embodiments of Fig. 2A to 6C.

### REFERENCE NUMERALS

- 1: System (detail); connected elements
- 2: Internal screw thread profile
- 2a: Flank
- 2b: Flank
- 2c: Crest region
- 2d: Root region
- 4: External screw thread profile
- 4a: Flank
- 4b: Flank
- 4c: Crest region
- 4d: Root region
- 10, 20, 30, 40: System (detail); connected elements (unique)
- 10', 20', 30', 40': System (detail); connected elements (standardized)
- 12, 22, 32, 42: Female thread profile
- 14, 24, 34, 44: Male thread profile (unique)
- 16, 26, 36, 46: Male thread profile (standardized)
- 22: Female thread profile
- 22a: Flank
- 22b: Flank
- 22c: Crest region
- 22d: Root region
- 22e: Region
- 26: Male thread profile (standardized)
- 26a: Flank
- 26b: Flank
- 26c: Crest region
- 26d: Root region
- 25: Male thread profile (unique)
- 28: Male thread profile (standardized, buttress threads)
- 28a: Region
- 50: System
- 52: First connection element (female)
- 54: Second connection element (male)
- 56: First module; cartridge
- 58: Second module; pressurized air system
- 60, 62: Step
- Ax: Axis
- Axᵢₙₜ: Axis
- Axₑₓₜ: Axis
- Ax_{std,1}: Axis
- Ax_{std,2}: Axis
- Arᵢₙₜ: Area (internal/female thread)
- Arₑₓₜ: Area (external/male thread)
- hᵢₙₜ: Thread height
- hₑₓₜ: Thread height
- u: Unit
- wᵢₙₜ: Width
- wₑₓₜ: Width

## Claims

1. Thread of a screw connection between a first module (56) and a second module (58); wherein a first connecting element (52) of the first module (56) has a first screw thread profile (22); and a second connecting element (54) of the second module (58) has a second screw thread profile (24, 26); wherein the first screw thread profile (22) is configured such that the first connecting element (52) is suited to be screw-connected to the second connecting element (54); wherein the first screw thread profile (22) has a reduced cross-sectional thread area in relation to a standardized screw thread profile (26).

2. Thread according to claim 1,
**characterized in that**
the first screw thread profile (22) is a female screw thread profile, and the second screw thread profile (24, 26) is a male screw thread profile.

3. Thread according to claim 1 or 2,
**characterized in that**
the standardized screw thread is of an ISO metric or a buttress type.

4. Thread according to one of the preceding claims,
**characterized in that**
the second screw thread profile (24) is configured essentially inverted to the first screw thread profile (22).

5. Thread according to one of the preceding claims,
**characterized in that**
the first screw thread profile (22) of the first connecting element (52) defines threads, each with a first flank (22a), a flat crest region (22c), and a second flank (22b), wherein at least one non-rounded edge is formed between the first (22a) or second flank (22b) and the crest region (22c).

6. Thread according to one of the preceding claims,
**characterized in that**
the first screw thread profile (22) has a rounded root region (22d) formed between a first (22a) and second flank (22b).

7. Thread according to one of the preceding claims,
**characterized in that**
the first screw thread profile (22) has a first (22a) and a second flank (22b), which are asymmetric.

8. Thread according to one of the preceding claims,
**characterized in that**
the first screw thread profile (22) is configured to engage with the second screw thread profile (26), in particular an ISO metric male screw thread profile (26), such that a non-rounded edge of the first screw thread profile (22) has a contact point with a flank (26b) of the second screw thread profile (26).

9. Thread according to one of the preceding claims,
**characterized in that**
the first (12) and/or second screw thread profile (14) is configured as a modified V-shaped profile, such that it has an inverted crest region, in particular a W- or M-shaped thread profile; and/or
the first (12) and/or second screw thread profile (14) is configured as a modified V-shaped profile, such that it has a broadened and/or deepened groove region.

10. Thread according to one of the preceding claims,
**characterized in that**
the first (22) and/or second screw thread profile (26) is configured as a modified V-shaped profile, such that one flank has a lower slope than the other flank.

11. Thread according to one of the preceding claims,
**characterized in that**
the first screw thread profile (22) is compatible to a standardized male thread profile (26), in particular to a metric ISO screw thread profile and/or a buttress-type thread profile.

12. Thread according to one of the preceding claims,
**characterized in that**
the first screw thread profile (22) is configured such that an internal thread height (hint) is larger than an external thread height (hₑₓₜ), in particular an external thread height (hₑₓₜ) of a corresponding standardized male thread profile (26), in particular a metric ISO screw thread profile and/or a buttress-type profile.

13. Air dryer cartridge (56) for connecting with a pressurized air system (58) with a thread according to one of claims 1 to 12.

14. System comprising a first module (56) and a second module (58), wherein the first (56) and second module (58) can be connected by a screw connection using a first connecting element (52) of the first module (56) and a second connecting element (54) of the second module (58), with a thread according to one of claims 1 to 13.
